# EUROPÄISCHE PATENTANMELDUNG

(11) **EP 1 502 563 A1**
(43) Veröffentlichungstag der Anmeldung: **02.02.2005**
(21) Anmeldenummer: 04017579.6
(22) Anmeldetag: 24.07.2004
(51) Int. Cl.: A61G 1/02, A61G 5/04, A61G 12/00, A61G 13/00, A61G 15/00, B62D 1/28

(54) **Verfahren zum Transport einer Patiententragplatte und Transportvorrichtung zur durchführung des Verfahrens**

(30) Priorität: 31.07.2003 DE 10336303
(71) Anmelder: TRUMPF Medizin Systeme GmbH., 07318 Saalfeld (DE)
(72) Erfinder: Hopfe, Peter, 96337 Ludwigstadt (DE); Gräf, Michael, 07747 Jena (DE); Georgi, Falk, 07318 Saalfeld (DE); Reichardt, Thomas, 07407 Uhlstädt (DE); Brand, Caroline, 07422 Rottenbach (DE)
(74) Vertreter: Karrais, Martin, Dr.

(57) **Zusammenfassung**

Die Erfindung betrifft ein Verfahren zum Transport einer Patiententragplatte, insbesondere einer Operationstischplatte, und/oder medizinischer Versorgungsgeräte mittels einer Transportvorrichtung. Um das Verfahren derart auszugestalten, daß die Transportvorrichtung möglichst erschütterungsfrei entlang einer Bodenfläche verfahren werden kann, wobei die Transportvorrichtung und die Bodenfläche auf einfache Weise gereinigt werden können, wird vorgeschlagen, daß man die Transportvorrichtung schienenungebunden und sensorgesteuert entlang einer vorgebbaren Bahnkurve verfährt. Außerdem wird eine Transportvorrichtung zur Durchführung des Verfahrens vorgeschlagen.

## Beschreibung

Die Erfindung betrifft ein Verfahren zum Transport einer Patiententragplatte, insbesondere einer Operationstischplatte, und/oder medizinischer Versorgungsgeräte mittels einer Transportvorrichtung.

Außerdem betrifft die Erfindung eine Transportvorrichtung zum Transport einer Patiententragplatte und/oder medizinischer Versorgungsgeräte, insbesondere zur Durchführung des voranstehend genannten Verfahrens, mit einer motorischen Antriebseinheit und mit einem Fahrwerk, an dem Räder zum Verfahren des Fahrwerks drehbar gelagert sind, wobei zumindest eines der Räder lenkbar und wobei zumindest eines der Räder mittels der Antriebseinheit drehend antreibbar ist.

Zum Transport einer Patiententragplatte, insbesondere einer Operationstischplatte, kommt üblicherweise ein Transportwagen zum Einsatz, der häufig eine motorische Antriebseinheit und in jedem Falle zumindest ein lenkbares Rad aufweist, so daß die Patiententragplatte entlang einer gewünschten Bahnkurve von einem Ort A zu einem Ort B verfahren werden kann. Anstatt in Form eines Transportwagens kann die Transportvorrichtung zum Transport eines Patienten auch als verfahrbarer Operationstisch ausgestaltet sein.

Es kann vorgesehen sein, daß die Transportvorrichtung eine Antriebseinheit aufweist, beispielsweise einen Elektromotor, mit deren Hilfe zumindest eines der Räder drehend antreibbar ist. Dadurch wird der Transport der Patiententragplatte und eines gegebenenfalls auf ihr ruhenden Patienten vereinfacht.

Es sind bereits schienengebundene Transportvorrichtungen bekannt, mit deren Hilfe die Patiententragplatte entlang der durch die Schienen vorgegebenen Bahnkurve verfahren werden kann. Dadurch läßt sich ein erschütterungsarmer und damit patientenschonender Transport sicherstellen, wobei allerdings der Transport nur entlang der Schienen erfolgen kann. Der Einsatz der Schienen hat außerdem den Nachteil, daß erhebliche Anstrengungen zur hygienischen Reinigung des gesamten Transportsystems erforderlich sind.

Aufgabe der vorliegenden Erfindung ist es, ein Verfahren sowie eine Transportvorrichtung der eingangs genannten Art derart weiterzubilden, daß die Transportvorrichtung möglichst erschütterungsfrei entlang einer Bodenfläche verfahren werden kann, wobei die Transportvorrichtung und die Bodenfläche auf einfache Weise gereinigt werden können.

Diese Aufgabe wird bei einem Verfahren der gattungsgemäßen Art erfindungsgemäß dadurch gelöst, daß man die Transportvorrichtung schienenungebunden und sensorgesteuert entlang einer vorgebbaren Bahnkurve verfährt.

In das erfindungsgemäße Verfahren fließt der Gedanke mit ein, daß eine erschütterungsfreie Fahrt der Transportvorrichtung durch den Einsatz von Sensoren erzielt werden kann, mit deren Hilfe die Transportvorrichtung schienenungebunden entlang einer vorgebbaren Bahnkurve verfahren werden kann. Zum Verfahren der Transportvorrichtung sind folglich keine Schienen erforderlich, so daß sowohl die Transportvorrichtung als auch die eine Fahrbahn ausbildende Bodenfläche zuverlässig gereinigt werden können, wobei auch höchste Anforderungen an die Hygiene ohne weiteres erfüllt werden können. Eine erschütterungsfreie Fahrt wird hierbei mittels der Sensoren gewährleistet, die bei Abweichung der Fahrtrichtung der Transportvorrichtung von der vorgegebenen Bahnkurve ein Sensorsignal bereitstellen, das zur Korrektur der Fahrtrichtung herangezogen werden kann. Mittels der Sensoren kann eine Abweichung der tatsächlichen Position der Transportvorrichtung von der durch die Bahnkurve vorgegebenen Position berührungslos erfaßt werden.

Günstig ist es, wenn man die Transportvorrichtung selbsttätig entlang einer sich über die Bahnkurve erstreckenden Wegmarkierung sensorgesteuert verfährt. Die Wegmarkierung erstreckt sich hierbei vom Startpunkt bis zum Fahrtziel der Transportvorrichtung und kann von dem zum Einsatz kommenden Sensor berührungslos erfaßt werden. Es kann vorgesehen sein, daß mehrere Wegmarkierungen im Abstand zueinander entlang der Bahnkurve verteilt angeordnet sind. Von dem mindestens einen Sensor werden die einzelnen Wegmarkierungen nacheinander erfaßt, wobei jeder Wegmarkierung eine Fahrtrichtungsänderung vorgegeben werden kann, so daß auf den Wegstrecken zwischen zwei Wegmarkierungen eine geradlinige Fahrt der Transportvorrichtung erfolgt, während im Bereich einer vom Sensor erfaßten Wegmarkierung eine vorgebbare Fahrtrichtungsänderung durchgeführt wird.

Insbesondere bei Einsatz einer Vielzahl von im Abstand zueinander angeordneter Wegmarkierungen ist es von Vorteil, wenn die Transportvorrichtung im Bereich zwischen zwei Wegmarkierungen mittels eines Abstandssensors gesteuert wird. Dies ermöglicht es auf konstruktiv einfache Weise, im Bereich zwischen zwei Wegmarkierungen einen gleichbleibenden Abstand der Transportvorrichtung zu einem Hindernis, beispielsweise zu einer Gebäudewand, sicherzustellen. Hierzu ist es lediglich erforderlich, mittels der Abstandssensoren den Abstand der Transportvorrichtung zum Hindernis festzustellen und bei Vorliegen eines einen Toleranzwert über- oder unterschreitenden Abstands eine Fahrtrichtungskorrektur durchzuführen.

Von besonderem Vorteil ist es, wenn man die Transportvorrichtung mittels eines magnetfeldempfindlichen oder eines bezüglich eines elektromagnetischen Feldes empfindlichen Sensorelementes selbsttätig entlang eines stromdurchflossenen elektrischen Leiters fährt, der sich entlang der vorgegebenen Bahnkurve erstreckt. Der stromdurchflossene Leiter kann entlang der Bahnkurve ein Magnetfeld bereitstellen, das vom magnetfeldempfindlichen Sensorelement detektiert werden kann, so daß die Transportvorrichtung entlang des Magnetfeldes selbsttätig verfahren werden kann. Der stromdurchflossene elektrische Leiter kann beispielsweise in die Bodenfläche integriert werden, die eine Fahrbahn für die Transportvorrichtung darstellt. Wird der elektrische Leiter von Wechselstrom durchflossen, so wird vom Leiter ein elektromagnetisches Feld erzeugt, das vom Sensorelement detektiert werden kann, zum Beispiel dadurch, daß im Sensorelement eine Spannung induziert wird. Das Sensorelement kann beispielsweise als Antenne in Form einer Leiterschleife ausgestaltet sein.

Von besonderem Vorteil ist es, wenn man der Transportvorrichtung bahnkurvenabhängige Geschwindigkeits- und Beschleunigungswerte vorgibt. Dies gibt die Möglichkeit, je nach gewünschter Bahnkurve ein bestimmtes Fahrverhalten vorzugeben, insbesondere eine bestimmte Fahrgeschwindigkeit und/oder ein bestimmtes Anfahr- und Bremsverhalten. So kann beispielsweise vorgesehen sein, daß bei einer Fahrt der Transportvorrichtung, bei der auf der Patiententragplatte ein Patient ruht, zur Schonung des Patienten eine verhältnismäßig geringe Geschwindigkeit und eine geringe Anfahr- und Bremsbeschleunigung vorgegeben werden, während bei einer Rückfahrt der Transportvorrichtung ohne Patienten höhere Geschwindigkeits- und Beschleunigungswerte zum Einsatz kommen können.

Von besonderem Vorteil ist es, wenn man die Transportvorrichtung wahlweise sensorgesteuert oder manuell lenkt. Dies gibt die Möglichkeit, jederzeit die vorgegebene Bahnkurve zu verlassen. Hierzu muß lediglich die selbsttätige sensorgesteuerte Lenkung ausgeschaltet werden, so daß das Bedienungspersonal dann die Transportvorrichtung manuell lenken kann.

Günstig ist es, wenn man die Transportvorrichtung mittels einer Antriebseinheit verfährt, da dadurch zum Transport der Patiententragplatte und eines gegebenenfalls auf der Tragplatte ruhenden Patienten nur ein sehr geringer Kraftaufwand erforderlich ist.

Bei einer Transportvorrichtung der gattungsgemäßen Art wird die voranstehend genannte Aufgabe erfindungsgemäß dadurch gelöst, daß die Transportvorrichtung schienenungebunden und sensorgesteuert entlang einer vorgebbaren Bahnkurve verfahrbar ist. Wie bereits erläutert, können dadurch insbesondere höchste Anforderungen an die einzuhaltende Hygiene der Transportvorrichtung und der Bodenfläche, entlang derer die Transportvorrichtung verfahrbar ist, eingehalten werden, da keine Schienen erforderlich sind, um einen erschütterungsfreien und mit geringer Kraftanstrengung erfolgenden Transport zu gewährleisten.

Zum selbsttätigen Verfahren der Transportvorrichtung ist es von Vorteil, wenn die Transportvorrichtung eine mit dem mindestens einen lenkbaren Rad gekoppelte Lenkeinheit umfaßt, die mit einer Sensoreinheit zum berührungslosen Erfassen der Position der Transportvorrichtung in Wirkverbindung steht. Mittels der Sensoreinheit kann die Lage der Transportvorrichtung bezogen auf die vorgegebene Bahnkurve berührungslos erfaßt werden. Von der Sensoreinheit kann der Lenkeinheit ein lageabhängiges Sensorsignal bereitgestellt werden, so daß mittels der Lenkeinheit das mindestens eine lenkbare Rad in Abhängigkeit von einer Abweichung der Ist-Position der Transportvorrichtung von einer durch die Bahnkurve vorgegebenen Soll-Position gelenkt werden kann.

Günstig ist es, wenn mittels der Sensoreinheit eine an der Bahnkurve angeordnete Wegmarkierung erfaßbar ist. Wie bereits erläutert, kann hierbei vorgesehen sein, daß mehrere Wegmarkierungen im Abstand zueinander entlang der Bahnkurve angeordnet sind. Von der Sensoreinheit werden die Wegmarkierungen berührungslos erfaßt. Hierbei kann vorgesehen sein, daß den Wegmarkierungen jeweils eine Fahrtrichtungsänderung vorgebbar ist dergestalt, daß die Transportvorrichtung eine Fahrtrichtungsänderung durchführt, wenn von der Sensoreinheit das Erreichen einer bestimmten Wegmarkierung signalisiert wird. Günstig ist es hierbei, wenn die Sensoreinheit Abstandssensoren aufweist, mit deren Hilfe im Bereich zwischen zwei Wegmarkierungen der Abstand der Transportvorrichtung zu einem Hindernis, beispielsweise zu einer Wand, erfaßt werden kann und bei Abweichung des erfaßten Abstandwertes von einem vorgegebenen Sollwert eine Fahrtrichtungsänderung durchführbar ist.

Von besonderem Vorteil ist es, wenn mittels der Sensoreinheit eine sich entlang der gesamten Bahnkurve erstreckende Wegmarkierung erfaßbar ist. Die Wegmarkierung kann beispielsweise in Form eines Leitstreifens ausgestaltet sein, der sich entlang der gesamten Bahnkurve erstreckt und entlang dessen die Transportvorrichtung schienenungebunden und sensorgesteuert selbsttätig verfahrbar ist.

Wie bereits erläutert, kommt bei der erfindungsgemäßen Transportvorrichtung vorzugsweise eine berührungslose Sensoreinheit zum Einsatz. Hierbei kann die Sensoreinheit beispielsweise ein lichtempfindliches Sensorelement aufweisen. Unter einem lichtempfindlichen Element wird in diesem Zusammenhang ein für Infrarotstrahlung und/oder für sichtbare Lichtstrahlung empfindliches Element verstanden. Der Einsatz eines derartigen lichtempfindlichen Sensorelementes hat den Vorteil, daß mit seiner Hilfe ein sich entlang der Bahnkurve erstrekkendes optisches Leitband berührungslos erfaßt werden kann. Das optische Leitband kann beispielsweise in Form eines sich entlang der vorgegebenen Bahnkurve erstreckenden Senders ausgestaltet sein, der sichtbare Lichtstrahlung oder Infrarotstrahlung aussendet und vorzugsweise streifenförmig ausgestaltet ist.

Es kann vorgesehen sein, daß die Sensoreinheit eine elektronische Kamera (CCD-Kamera) umfaßt. Mittels der Kamera kann beispielsweise ein sich entlang der Bahnkurve erstreckendes Farbmuster, beispielsweise ein heller Streifen auf dunklem Untergrund, erfaßt werden.

Bei einer besonders bevorzugten Ausführungsform der erfindungsgemäßen Transportvorrichtung weist die Sensoreinheit ein magnetfeldempfindliches Sensorelement auf, beispielsweise einen Hallsensor. Wie bereits erläutert, ermöglicht es eine derartige Ausgestaltung auf konstruktiv einfache Weise, die Transportvorrichtung entlang eines Magnetfeldes zu verfahren, das sich entlang der vorgegebenen Bahnkurve erstreckt und das von dem Sensorelement berührungslos erfaßt werden kann. Das Magnetfeld kann hierbei von einem stromdurchflossenen elektrischen Leiter erzeugt werden, der in eine Bodenfläche integriert ist, an der die Transportvorrichtung verfahrbar ist.

Bei einer besonders bevorzugten Auführungsform weist die Sensoreinheit ein ein elektromagnetisches Feld detektierendes Sensorelement auf. Dies gibt die Möglichkeit, den voranstehend genannten elektrischen Leiter mit Wechselspannung zu beaufschlagen, so daß der Leiter von Wechselstrom durchflossen ist und ein elektromagnetisches Feld erzeugt, das vom Sensorelement erfaßbar ist. Das Sensorelement kann beispielsweise als Antenne in Form einer Leiterschleife ausgestaltet sein, in der eine Spannung induziert wird. Die somit erzeugte Induktionsspannung ist vom Abstand des Sensorelementes von dem Leiter abhängig, so daß die Stärke der Induktionsspannung ein Maß darstellt für den Abstand, den die Transportvorrichtung zur Bahnkurve aufweist.

Günstig ist es, wenn die Transportvorrichtung eine Steuereinheit umfaßt, die mit der Lenkeinheit sowie mit der Sensoreinheit verbunden ist und die ein Vergleichsglied umfaßt zum Vergleich der von der Sensoreinheit erfaßten Ist-Position mit einer vorgebbaren Soll-Position, wobei bei einer vorgegebenen Abweichung der Ist-Position von der Soll-Position der Lenkeinheit ein Lenksignal bereitstellbar ist. Aufgrund des bereitgestellten Lenksignales kann die Lenkeinheit eine Fahrtrichtungsänderung der Transportvorrichtung hervorrufen, um auf diese Weise die Ist-Position der Soll-Position anzunähern.

Vorzugsweise ist die Steuereinheit mit der Antriebseinheit der Transportvorrichtung verbunden, wobei der Steuereinheit Geschwindigkeits- und/oder Beschleunigungswerte für die Fahrt der Transportvorrichtung entlang der Bahnkurve vorgebbar sind, und wobei die Antriebseinheit mittels der Steuereinheit in Abhängigkeit der vorgegebenen Geschwindigkeits- und/oder Beschleunigungswerte steuerbar ist. Eine derartige Ausgestaltung hat den Vorteil, daß der Transportvorrichtung, um eine erschütterungsfreie Fahrt entlang der gewünschten Bahnkurve sicherzustellen, ein bestimmtes Fahrverhalten, insbesondere ein bestimmtes Anfahr- und Bremsverhalten, vorgegeben werden kann. Hierbei kann beispielsweise vorgesehen sein, daß der Steuereinheit für die Fahrt der Transportvorrichtung entlang einer bestimmten Bahnkurve mehrere wegabhängige Geschwindigkeits- und/oder Beschleunigungswerte vorgebbar sind, so daß in Abhängigkeit von der zurückgelegten Wegstrecke mittels der Antriebseinheit eine gewünschte Geschwindigkeit und/oder eine gewünschte Beschleunigung eingehalten werden kann. Dies ermöglicht einerseits einen besonders schonenden Transport eines auf der Patiententragplatte ruhenden Patienten, wobei andererseits ein zügiger Rücktransport der Transportvorrichtung sichergestellt werden kann, falls auf der Patiententragplatte kein Patient Platz nimmt.

Günstig ist es, wenn der Steuereinheit ein Speicherglied zum Abspeichern bahnkurvenabhängiger Geschwindigkeits- und/oder Beschleunigungswerte zugeordnet ist. Als Speicherglied kann insbesondere ein Festwertspeicher zum Einsatz kommen. Mittels des Speichergliedes können Geschwindigkeits- und/oder Beschleunigungswerte unterschiedlicher Bahnkurven abgespeichert werden. Dies gibt die Möglichkeit, in Abhängigkeit von einer gewünschten Bahnkurve die zugeordneten Geschwindigkeits- und/oder Beschleunigungswerte abzurufen und der Steuereinheit bereitzustellen.

Von besonderem Vorteil ist es hierbei, wenn die Geschwindigkeits- und/oder Beschleunigungswerte während einer Lernfahrt der Transportvorrichtung selbsttätig speicherbar sind. Dies gibt die Möglichkeit, die Transportvorrichtung mit einem "Bewegungsgedächtnis" auszustatten derart, daß die Geschwindigkeits- und/oder Beschleunigungswerte, die die Transportvorrichtung während einer vom Bedienungspersonal manuell gesteuerten Lernfahrt aufweist, abgespeichert und für anschließende, von der Steuereinheit gesteuerte Fahrten herangezogen werden können.

Es kann vorgesehen sein, daß anläßlich einer Lernfahrt in Abhängigkeit von der zurückgelegten Wegstrecke die jeweilige Fahrtrichtung der Transportvorrichtung speicherbar ist und daß während einer anschließenden sensorgesteuerten Fahrt der Transportvorrichtung die wegabhängigen Fahrtrichtungsdaten mit den aktuellen Fahrtrichtungsdaten vergleichbar und gegebenenfalls auftretende Abweichungen korrigierbar sind. Bei einer derartigen Ausgestaltung kann die Sensoreinheit in Form eines Wegsensors ausgestaltet sein, und zusätzlich kann die jeweilige Fahrtrichtung der Transportvorrichtung berührungslos erfaßbar sein. Hierzu kann beispielsweise die Ausrichtung des mindestens einen lenkbaren Rades abgetastet werden und zusätzlich kann der zurückgelegte Weg, bezogen auf einen Startpunkt der vorgegebenen Bahnkurve, erfaßt werden.

Bei einer bevorzugten Ausführungsform ist der Steuereinheit ein Eingabeelement zugeordnet zur Eingabe bahnkurvenabhängiger Geschwindigkeits- und/oder Beschleunigungswerte. Dies ermöglicht es, die Steuereinheit zu programmieren, indem beispielsweise mittels einer Eingabetastatur oder einer Schnittstelle jeweils einer bestimmten Bahnkurve zugeordnete Geschwindigkeits- und/oder Beschleunigungswerte eingegeben werden. Hierbei kann vorgesehen sein, daß einer bestimmten Bahnkurve mehrere Sätze von Geschwindigkeits- und/oder Beschleunigungswerte zugeordnet sein können. Dies gibt die Möglichkeit, in Abhängigkeit von den jeweils vorliegenden Transportbedingungen für eine bestimmte Bahnkurve einen speziellen Satz von Geschwindigkeits- und/oder Beschleunigungswerte abzurufen. Beispielsweise kann für eine bestimmte Bahnkurve ein erster Satz von Geschwindigkeits- und/oder Beschleunigungswerte vorgesehen sein für den Transport eines Patienten zu einem Operationssaal, während ein weiterer Satz von Geschwindigkeits- und Beschleunigungswerte für die identische Bahnkurve vorgesehen sein kann für die Fahrt der Transportvorrichtung ohne Patienten.

Günstig ist es, wenn der Steuereinheit ein Bedienungselement, insbesondere eine Fernbedienung, zugeordnet ist zur Auswahl von einer gewünschten Bahnkurve zugeordneten Geschwindigkeits- und/oder Beschleunigungswerten. Das Bedienungselement kann über ein Anschlußkabel mit der Steuereinheit der Transportvorrichtung verbunden sein. Besonders günstig ist es, wenn das Bedienungselement drahtlos mit der Steuereinheit in Verbindung steht. So können beispielsweise für die Verbindung des Bedienungselementes mit der Steuereinheit ein Infrarotsender und ein zugeordneter Infrarotempfänger zum Einsatz kommen.

Die Transportvorrichtung kann zum Transport einer Patiententragplatte oder auch zum Transport medizinischer Versorgungsgeräte zum Einsatz kommen. Besonders günstig ist es, wenn die Transportvorrichtung einen selbstfahrenden und selbststeuernden Operationstisch ausbildet. Eine derartige Ausgestaltung hat den Vorteil, daß ein Patient, der auf der Patiententragplatte ruht, vor, während und/oder nach einer Operation erschütterungsfrei und ohne Kraftanstrengung für das Bedienungspersonal von einem ersten Ort, beispielsweise dem Operationssaal, zu einem zweiten Ort verfahren werden kann. Am zweiten Ort können beispielsweise Röntgengeräte, ein Computertomograph, ein Magnetresonanztomograph oder andere Diagnosegeräte angeordnet sein. Anschließend kann der Patient mittels der Transportvorrichtung wahlweise wieder zum Operationssaal oder aber zu einem anderen Ort transportiert werden. Hierbei kann vorgesehen sein, daß medizinische Geräte zur Versorgung des Patienten an der die Patiententragplatte aufnehmenden Transportvorrichtung gehalten sind. Alternativ kann eine zusätzliche Transportvorrichtung zum Transport der medizinischen Versorgungsgeräte zum Einsatz kommen, die entsprechend der den Patienten transportierenden Transportvorrichtung sensorgesteuert verfahrbar ist.

Wie bereits erläurtert, ist es günstig, wenn die Transportvorrichtung wahlweise sensorgesteuert oder manuell lenkbar ist. Dies gibt dem Bedienungspersonal die Möglichkeit, die Transportvorrichtung entweder sensorgesteuert selbsttätig zu verfahren oder aber die Transportvorrichtung manuell zu lenken. Besonders günstig ist es hierbei, wenn die Transportvorrichtung wahlweise motorisch antreibbar oder manuell verfahrbar ist. Das Bedienungspersonal hat dadurch die Möglichkeit, zwischen drei Betriebsarten der Transportvorrichtung zu wählen, wobei in einer ersten Betriebsart eine manuelle Lenkung und ein manueller Antrieb zum Einsatz kommen, in einer zweiten Betriebsart kommen ein motorischer Antrieb aber eine manuelle Lenkung zum Einsatz und in einer dritten Betriebsart ist sowohl eine selbsttätige Lenkung als auch ein selbsttätiger Antrieb vorgesehen dergestalt, daß die Transportvorrichtung selbsttätig sensorgesteuert verfahrbar ist.

Zum motorischen Antrieb weist die Transportvorrichtung zumindest ein drehend antreibbares Rad auf. Dieses Rad bildet ein Antriebsrad aus, wobei es von besonderem Vorteil ist, wenn das Antriebsrad höhenverstellbar am Fahrwerk gehalten ist. Das Antriebsrad kann dadurch wahlweise entweder in einer zur Bodenfläche beabstandeten Stellung oder in einer die Bodenfläche kontaktierenden Stellung gehalten werden, wobei es vorteilhaft ist, wenn das Antriebsrad gegen die Bodenfläche andrückbar ist. Soll die Transportvorrichtung motorisch angetrieben werden, so wird hierzu das Antriebsrad in seine die Bodenfläche kontaktierende Stellung überführt, während beim Verfahren der Transportvorrichtung ohne motorischen Antrieb das Antriebsrad mittels einer Hubeinrichtung in seine zur Bodenfläche beabstandete Stellung überführt wird.

Die erfindungsgemäße Transportvorrichtung weist zumindest ein lenkbares Rad und zumindest ein drehend antreibbares Rad auf. Hierbei kann vorgesehen sein, daß das drehend antreibbare Rad gleichzeitig lenkbar ausgestaltet ist und somit sowohl die Lenkung der Transportvorrichtung als auch die Funktion des motorischen Antriebs der Transportvorrichtung übernimmt.

Die nachfolgende Beschreibung zweier bevorzugter Ausführungsformen der Erfindung dient im Zusammenhang mit der Zeichnung der näheren Erläuterung. Es zeigen:
- Figur 1:: eine schaubildliche Darstellung einer ersten Ausführungsform einer erfindungsgemäßen Transportvorrichtung zum Transport einer Patiententragplatte;
- Figur 2:: eine schematische, teilweise aufgetrennte Unteransicht der Transportvorrichtung gemäß Figur 1;
- Figur 3:: ein Blockschaltbild der Steuerkomponenten der Transportvorrichtung gemäß Figur 1;
- Figur 4:: eine beispielhafte Darstellung unterschiedlicher Bahnkurven, entlang derer die Transportvorrichtung sensorgesteuert verfahrbar ist;
- Figur 5:: eine schematische Darstellung der mit einer Wegmarkierung zusammenwirkenden Transportvorrichtung und
- Figur 6:: eine schaubildliche Darstellung einer zweiten Ausführungsform einer erfindungsgemäßen Transportvorrichtung in Form einer verfahrbaren Operationstischplatte.

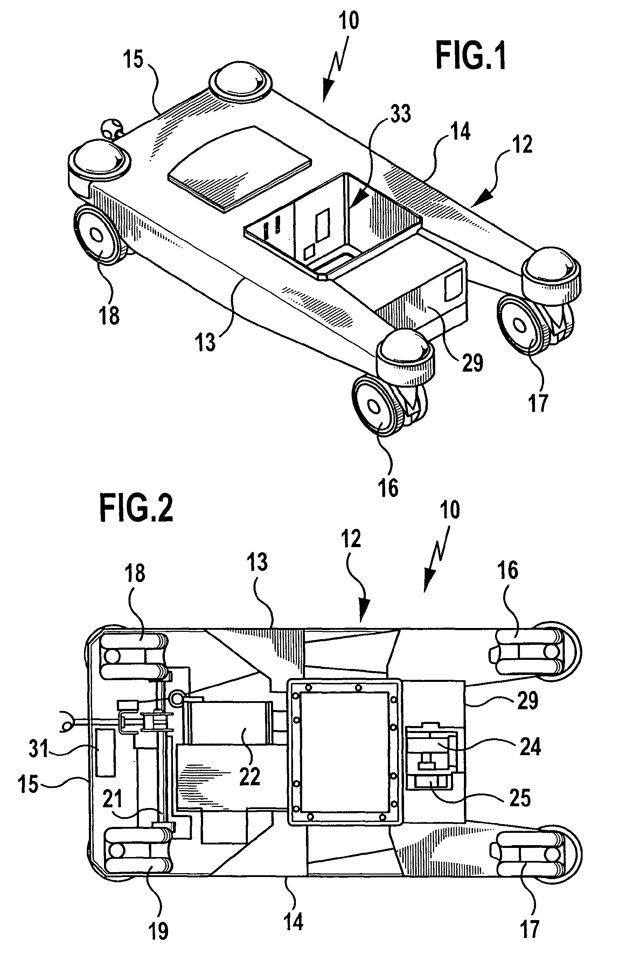

In den Figuren 1 bis 5 ist schematisch eine insgesamt mit dem Bezugszeichen 10 belegte erste Ausführungsform einer erfindungsgemäßen Transportvorrichtung dargestellt. Sie umfaßt ein Fahrwerk 12, das einen im wesentlichen U-förmigen Rahmen bildet mit zwei parallel zueinander ausgerichteten Längsholmen 13, 14 und einem Querholm 15. An den äußeren Eckpunkten des Fahrwerkes 12 ist jeweils ein Rad in Form einer Doppelgelenkrolle 16, 17, 18, 19 drehbar gelagert, wobei die im Bereich des Querholms 15 gelagerten Doppelgelenkrollen 18, 19 über eine Lenkstange 21 starr miteinander verbunden sind, die mit einem in das Fahrwerk 12 integrierten Lenkmotor 22 gekoppelt ist. Sämtliche Doppelgelenkrollen 16 bis 19 sind in üblicher Weise um eine vertikale Schwenkachse verschwenkbar am Fahrwerk 12 gehalten, und mittels der Lenkstange 21 und des Lenkmotors 22 können die Doppelgelenkrollen 18 und 19 koordiniert gelenkt werden.

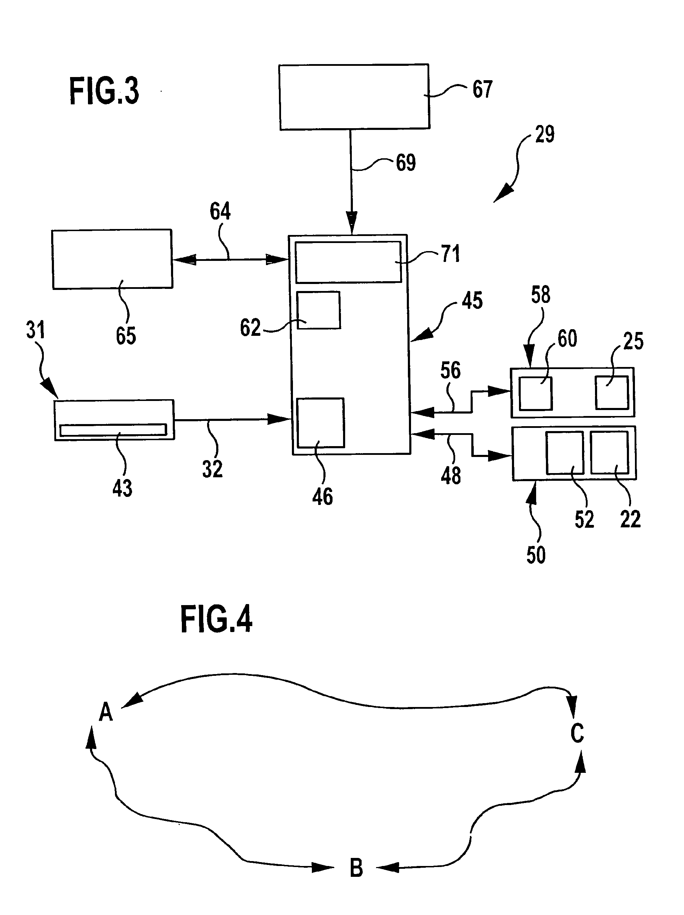

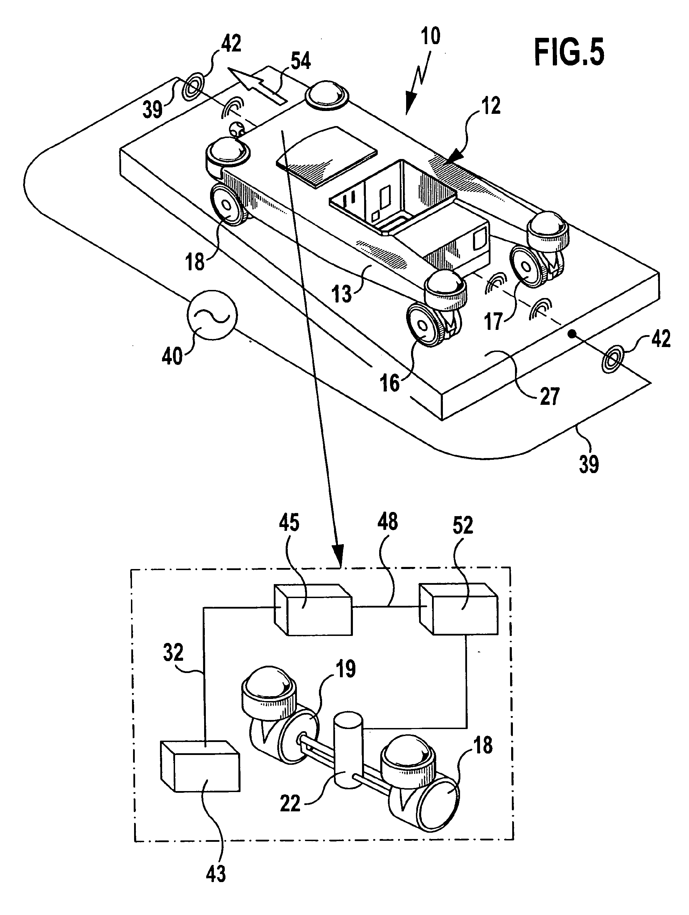

Im Bereich zwischen den beiden Längsholmen 13, 14 ist unterseitig am Fahrwerk 12 höhenverstellbar ein Antriebsrad 24 gehalten, das mittels eines Antriebsmotors 25 drehend antreibbar ist. Zum motorischen Antrieb der Transportvorrichtung 10 kann das Antriebsrad mittels einer an sich bekannten und deshalb in Figur 3 nur schematisch dargestellten Hubeinrichtung 60 auf eine in Figur 5 schematisch dargestellte Bodenfläche 27 abgesenkt und gegen diese angedrückt werden, während bei Betrieb der Transportvorrichtung 10 ohne motorischen Antrieb das Antriebsrad 27 in eine zur Bodenfläche 27 beabstandete Stellung angehoben werden kann.

Das Fahrwerk 12 nimmt zwischen den beiden Längsholmen 13, 14 eine Steuereinrichtung 29 auf, die über eine Sensorleitung 32 mit einer Sensoreinheit 31 elektrisch verbunden ist, die in Querrichtung mittig der Bodenfläche 27 zugewandt an der Unterseite des Querholms 15 gehalten ist.

Oberseitig weist das Fahrwerk 12 im Bereich zwischen den beiden Längsholmen 13, 14 eine Aufnahme 33 auf, in die eine Stützeinrichtung für wahlweise eine Patiententragplatte oder für medizinische Versorgungsgeräte eingesetzt werden kann, so daß diese mittels der Transportvorrichtung 10 transportiert werden können.

Die Transportvorrichtung 10 ist selbstfahrend und selbstlenkend ausgestaltet und kann sensorgesteuert entlang einer vorgebbaren Bahnkurve mit programmierbarem Fahrverhalten verfahren werden. Die Bahnkurve kann hierbei durch Wegmarkierungen vorgegeben werden, die von der Sensoreinheit 31 erfaßt werden, so daß dem Lenkmotor 22 ein Lenksignal bereitgestellt werden kann zur selbsttätigen Lenkung der Doppelgelenkrollen 18, 19 entlang der gewünschten Bahnkurve.

Als Wegmarkierung kann beispielsweise ein in Figur 5 dargestellter Leitdraht 39 zum Einsatz kommen, der in die Bodenfläche 27 integriert und an eine elektrische Spannungsversorgung 40 angeschlossen ist. Mittels der Spannungsversorgung 40 kann der Leitdraht 39 mit Wechselspannung beaufschlagt werden, die beispielsweise eine Frequenz von ca. 5 bis etwa 12 kHz aufweisen kann, so daß der Leitdraht 39 ein elektromagnetisches Feld 42 erzeugt, das sich entlang der gewünschten Bahnkurve erstreckt und das von einem Sensorelement 43 der Sensoreinheit 31 detektiert werden kann. Das Sensorelement kann beispielsweise in Form einer Leiterschleife ausgestaltet sein, in der eine Induktionsspannung induziert wird aufgrund der Einwirkung des elektromagnetischen Feldes 42. Die Sensoreinheit 31 steht über die Sensorleitung 32 mit einer Steuereinheit 45 der Steuereinrichtung 29 in Verbindung, die ein Vergleichsglied 46 aufweist. Dem Vergleichsglied 46 kann eine Soll-Position in Form einer maximalen Induktionsspannung vorgegeben werden, die mit der im Sensorelement 43 induzierten Spannung verglichen werden kann. Bei Abweichungen der Soll-Position von der Ist-Position relativ zum Leitdraht 39 wird vom Vergleichsglied 46 ein Steuersignal bereitgestellt, das über eine erste Signalleitung 48 an eine Lenkeinheit 50 übertragen werden kann. Die Lenkeinheit 50 umfaßt den bereits erläuterten Lenkmotor 22 sowie einen diesem vorgelagerten Lenkverstärker 52. Durch berührungsloses Erfassen des vom Leitdraht 39 erzeugten elektromagnetischen Feldes 42 kann somit die in Figur 5 durch den Pfeil 54 illustrierte Fahrtrichtung der Transportvorrichtung 10 mittels der Lenkeinheit 50 kontinuierlich derart gewählt werden, daß die Transportvorrichtung 10 dem elektromagnetischen Feld 42 selbsttätig folgt.

Über eine zweite Signalleitung 56 ist die Steuereinheit 45 mit einer Antriebseinheit 58 verbunden, die den bereits erläuterten Antriebsmotor 25 umfaßt sowie die Hubeinrichtung 60 zum Anheben und Absenken des Antriebsrades 24. Dies gibt die Möglichkeit, das Fahrverhalten der Transportvorrichtung 10 bei seiner Fahrt entlang des Leitdrahtes 39 vorzugeben. Insbesondere können die Fahrgeschwindigkeit sowie das Anfahr- und Bremsverhalten der Transportvorrichtung 10 vorgegeben werden. Hierzu weist die Steuereinheit 45 ein Speicherglied 62 auf, das über eine Eingabeleitung 64 mit einer Programmiereinheit 65 in elektrischer Verbindung steht. Mittels der Programmiereinheit 65 können dem Speicherglied 62 bahnkurvenabhängige Geschwindigkeits- und Beschleunigungswerte eingegeben werden, d. h. für eine gewünschte Bahnkurve können im Speicherglied 62 die Fahrdaten für ein gewünschtes Fahrverhalten hinterlegt werden. Zur Fahrt entlang einer gewünschten Bahnkurve können dann diese Fahrdaten dem Speicherglied 62 entnommen und zur Steuerung der Antriebseinheit 58 verarbeitet werden.

Zur Bedienung der Transportvorrichtung 10 ist der Steuereinheit 45 eine Fernbedienungseinheit 67 zugeordnet, die in der dargestellten Ausführungsform über eine Infrarotverbindung 69 mit der Steuereinheit 45 gekoppelt ist. Hierzu weist die Steuereinheit 45 eine Empfangseinheit 71 auf. Mittels der Fernbedienungseinheit 67 kann ein Benutzer die Transportvorrichtung 10 in drei unterschiedlichen Betriebsarten betreiben. In einer ersten Betriebsart sind sowohl die Antriebseinheit 58 als auch die Lenkeinheit 50 deaktiviert, so daß die Transportvorrichtung 10 manuell verschoben und gelenkt werden kann. In einer zweiten Betriebsart wird lediglich die Antriebseinheit 58, nicht aber auch die Lenkeinheit 50 aktiviert. Dies gibt einem Benutzer die Möglichkeit, die Transportvorrichtung 10 mit sehr geringem Kraftaufwand zu verfahren, wobei die Fahrt der Transportvorrichtung 10 nicht an eine vorgegebene Bahnkurve gebunden ist. In einer dritten Betriebsart wird sowohl die Antriebseinheit 58 als auch die Lenkeinheit 50 aktiviert. Hierbei hat ein Benutzer die Möglichkeit, entweder die im Speicherglied 62 einer bestimmten Bahnkurve zugeordneten Fahrdaten abzurufen, oder aber der Benutzer kann für eine aktuelle Fahrt der Transportvorrichtung 10 neue Fahrdaten, also insbesondere eine neue Fahrgeschwindigkeit sowie neue Beschleunigungswerte eingeben oder einen frei wählbaren abgespeicherten Datensatz, der nicht an eine bestimmte Bahnkurve gebunden ist, auswählen, der dann für die aktuelle Fahrt von der Steuereinheit 45 verwertet wird.

Mittels der Transportvorrichtung 10 kann einen schienenfreier und patientenschonender Transport mit sanften Anfahr- und Bremsvorgängen gewährleistet werden. Hierbei kann beispielsweise vorgesehen sein, daß mittels der Transportvorrichtung 10 ein Patient ausgehend von einem in Figur 4 dargestellten Ort A, beispielsweise einer Patientenaufnahme, zunächst entlang einer ersten Bahnkurve mit einer ersten Geschwindigkeit und mit ersten Beschleunigungsund Bremswerten erschütterungsfrei und schonend zu einem Ort B transportiert wird, um verschiedene Diagnosen durchzuführen. Anschließend kann der Patient entweder zum Ort A zurücktransportiert werden, wobei gegebenenfalls ein anderes Fahrverhalten gewählt werden kann, oder aber der Patient kann ausgehend vom Ort B zu einem Ort C transportiert werden, beispielsweise einem Operationssaal, wobei wiederum ein anderes Fahrverhalten eingesetzt werden kann. In einem weiteren Schritt kann dann der Patient ausgehend vom Ort C entweder zurück zum Ort B oder zum Ort A transportiert werden, wobei wiederum ein anderes Fahrverhalten vorgegeben werden kann. Der Transport zwischen den Orten A, B und C erfolgt hierbei erschütterungsfrei, da sich die Transportvorrichtung 10 selbsttätig sensorgesteuert entlang des Leitdrahtes 39 ausrichtet, der die Orte A, B und C miteinander verbindet.

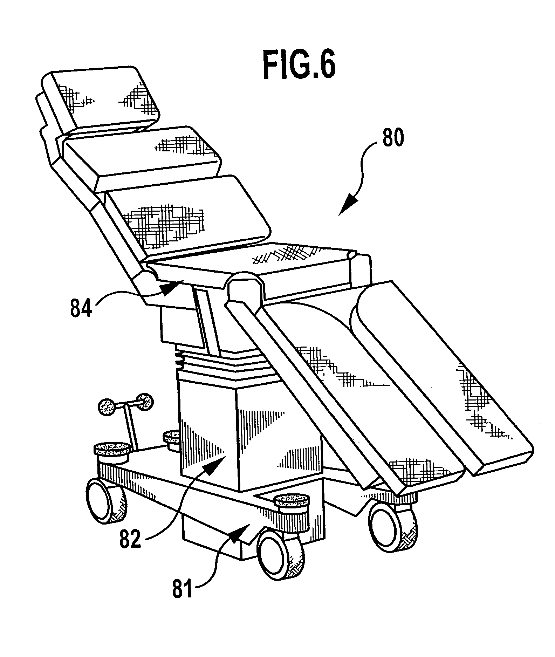

Wie bereits erläutert, kann in die Aufnahme 33 der Transportvorrichtung 10 eine Stützeinrichtung für eine Patiententragplatte eingesetzt werden. Von besonderem Vorteil ist es, wenn die erfindungsgemäße Transportvorrichtung einen selbstfahrenden und selbstlenkenden Operationstisch 80 ausbildet, wie er beispielhaft in Figur 6 dargestellt ist. Dieser umfaßt eine Transporteinheit 81, die identisch ausgestaltet ist wie die voranstehend unter Bezugnahme auf die Figuren 1 bis 5 erläuterte Transportvorrichtung 10. Die Transporteinheit 81 trägt eine Tischsäule 82 des Operationstisches 80. Die Tischsäule 82 ist in üblicher Weise höhenverstellbar ausgestaltet und trägt oberseitig eine Patiententragplatte in Form einer dem Fachmann bekannten verstellbaren Operationstischplatte 84.

Mittels der Transporteinheit 81 kann der mobile Operationstisch 80 sensorgesteuert entlang einer vorgegebenen Bahnkurve mit programmierbaren Fahrverhalten verfahren werden. Die Fahrt des Operationstisches 80 erfolgt hierbei schienenfrei. Damit wird die Einhaltung der Hygiene des Operationstisches 80 sowie der Bodenfläche, entlang derer der Operationstisch 80 verfahrbar ist, gewährleistet. Mittels des Operationstisches 10 ist ein patientenschonender Transport möglich, insbesondere kann ein Patient von einem Operationstisch zu einem Diagnosegerät und zurück verfahren werden, ohne daß hierzu eine Umbettung des Patienten erforderlich ist. Soll eine vorgegebene Bahnkurve verlassen werden, so ist es hierzu lediglich erforderlich, die Lenkeinheit 50 der Transporteinheit 81 in entsprechender Weise zu deaktivieren, wie dies voranstehend unter Bezugnahme auf die Transportvorrichtung 10 im Detail erläutert wurde.

## Patentansprüche

1. Verfahren zum Transport einer Patiententragplatte, insbesondere einer Operationstischplatte, und/oder medizinischer Versorgungsgeräte mittels einer Transportvorrichtung, **dadurch gekennzeichnet, daß** man die Transportvorrichtung schienenungebunden und sensorgesteuert entlang einer vorgebbaren Bahnkurve verfährt.

2. Verfahren nach Anspruch 1, **dadurch gekennzeichnet, daß** man die Transportvorrichtung selbsttätig entlang einer sich über die Bahnkurve erstrekkenden Wegmarkierung verfährt.

3. Verfahren nach einem der voranstehenden Ansprüche, **dadurch gekennzeichnet, daß** man die Transportvorrichtung mittels eines Sensorelementes selbsttätig entlang eines stromdurchflossenen elektrischen Leiters verfährt, wobei man mittels des Sensorelementes ein Magnetfeld oder ein elektromagnetisches Feld, das vom Leiter erzeugt wird, detektiert.

4. Verfahren nach einem der voranstehenden Ansprüche, **dadurch gekennzeichnet, daß** man der Transportvorrichtung bahnkurvenabhängige Geschwindigkeits- und/oder Beschleunigungswerte vorgibt.

5. Transportvorrichtung zum Transport einer Patiententragplatte und/oder medizinischer Versorgungsgeräte, insbesondere zur Durchführung des voranstehend genannten Verfahrens, mit einer motorischen Antriebseinheit und mit einem Fahrwerk, an dem Räder zum Verfahren des Fahrwerks drehbar gelagert sind, wobei zumindest ein Rad lenkbar und wobei zumindest ein Rad mittels der Antriebseinheit drehend antreibbar ist, **dadurch gekennzeichnet, daß** die Transportvorrichtung (10; 80) schienenungebunden und sensorgesteuert entlang einer vorgebbaren Bahnkurve verfahrbar ist.

6. Transportvorrichtung nach Anspruch 5, **dadurch gekennzeichnet, daß** die Transportvorrichtung (10; 80) eine mit dem mindestens einen lenkbaren Rad gekoppelte Lenkeinheit (50) umfaßt, die mit einer Sensoreinheit (31) zum berührungslosen Erfassen der Position der Transportvorrichtung (10; 80) in Wirkverbindung steht.

7. Transportvorrichtung nach Anspruch 6, **dadurch gekennzeichnet, daß** mittels der Sensoreinheit (31) eine an der Bahnkurve angeordnete Wegmarkierung (39, 42) erfaßbar ist.

8. Transportvorrichtung nach Anspruch 6 oder 7, **dadurch gekennzeichnet, daß** mittels der Sensoreinheit (31) eine sich entlang der Bahnkurve erstreckende Wegmarkierung (39, 42) erfaßbar ist.

9. Transportvorrichtung nach Anspruch 6, 7 oder 8, **dadurch gekennzeichnet, daß** die Sensoreinheit (31) ein lichtempfindliches Sensorelement umfaßt.

10. Transportvorrichtung nach Anspruch 6, 7, 8 oder 9, **dadurch gekennzeichnet, daß** die Sensoreinheit (31) eine elektronische Kamera umfaßt.

11. Transportvorrichtung nach einem der Ansprüche 6 bis 10, **dadurch gekennzeichnet, daß** die Sensoreinheit (31) ein magnetfeldempfindliches Sensorelement umfaßt.

12. Transportvorrichtung nach einem der Ansprüche 6 bis 11, **dadurch gekennzeichnet, daß** die Sensoreinheit (31) ein ein elektromagnetisches Feld detektierendes Sensorelement (43) umfaßt.

13. Transportvorrichtung nach einem der Ansprüche 6 bis 12, **dadurch gekennzeichnet, daß** die Transportvorrichtung (10; 80) eine Steuereinheit (45) aufweist, die mit der Lenkeinheit (50) sowie mit der Sensoreinheit (31) verbunden ist und die ein Vergleichsglied (46) umfaßt zum Vergleich der von der Sensoreinheit (31) erfaßten Ist-Position mit einer vorgebbaren Soll-Position, wobei bei Abweichung der Ist-Position von der Soll-Position der Lenkeinheit (50) ein Lenksignal bereitstellbar ist.

14. Transportvorrichtung nach einem der Ansprüche 5 bis 13, **dadurch gekennzeichnet, daß** die Transportvorrichtung (10; 80) eine Steuereinheit (45) aufweist, die mit der Antriebseinheit (58) verbunden ist, wobei der Steuereinheit (45) Geschwindigkeits- und/oder Beschleunigungswerte für die Fahrt der Transportvorrichtung (10; 80) entlang der Bahnkurve vorgebbar sind, wobei die Antriebseinheit (58) mittels der Steuereinheit (45) in Abhängigkeit der vorgegebenen Geschwindigkeits- und/oder Beschleunigungswerte steuerbar ist.

15. Transportvorrichtung nach Anspruch 14, **dadurch gekennzeichnet, daß** der Steuereinheit (45) ein Speicherglied (62) zum Abspeichern bahnkurvenabhängiger Geschwindigkeits- und/oder Beschleunigungswerte zugeordnet ist.

16. Transportvorrichtung nach Anspruch 15, **dadurch gekennzeichnet, daß** die Geschwindigkeits- und/oder Beschleunigungswerte während einer Lernfahrt der Transportvorrichtung 10; 80) selbsttätig abspeicherbar sind.

17. Transportvorrichtung nach Anspruch 15 oder 16, **dadurch gekennzeichnet, daß** der Steuereinheit (45) ein Eingabeelement (65) zugeordnet ist zur Eingabe bahnkurvenabhängiger Geschwindigkeits- und Beschleunigungswerte.

18. Transportvorrichtung nach einem der Ansprüche 14 bis 17, **dadurch gekennzeichnet, daß** der Steuereinheit (45) ein Bedienungselement (67) zugeordnet ist zur Auswahl von einer gewünschten Bahnkurve zugeordneten Geschwindigkeits- und/oder Beschleunigungswerten.

19. Transportvorrichtung nach einem der Ansprüche 5 bis 18, **dadurch gekennzeichnet, daß** die Transportvorrichtung einen selbstfahrenden und selbstlenkenden Operationstisch (80) ausbildet.

20. Transportvorrichtung nach einem der Ansprüche 5 bis 19, **dadurch gekennzeichnet, daß** die Transportvorrichtung (10; 80) wahlweise sensorgesteuert lenkbar oder manuell lenkbar ist.

21. Transportvorrichtung nach einem der Ansprüche 5 bis 20, **dadurch gekennzeichnet, daß** die Transportvorrichtung (10; 80) ein höhenverstellbar am Fahrwerk (12) gehaltenes Antriebsrad (24) umfaßt.
